(19) Europäisches Patentamt
European Patent Office
Office européen des brevets

(11) **EP 3 434 360 A1**

(12) **EUROPEAN PATENT APPLICATION**

(43) Date of publication:
**30.01.2019 Bulletin 2019/05**

(51) Int Cl.:
*B01J 8/18* (2006.01)       *B01J 8/42* (2006.01)

(21) Application number: **17306005.4**

(22) Date of filing: **27.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **CENTRE NATIONAL DE LA RECHERCHE SCIENTIFIQUE**
**75016 Paris (FR)**
• **Beijing University Of Chemical Technology**
**Beijing 100029 (CN)**

(72) Inventors:
• **FLAMANT, Gilles**
**66800 LLO (FR)**
• **BAEYENS, Jan**
**3120 TREMELO (BE)**
• **ZHANG, Huili**
**BEIJING, Beijing 100029 (CN)**

(74) Representative: **Andrieux, Benoît**
**LLR**
**11 Boulevard de Sébastopol**
**75001 Paris (FR)**

(54) **DEVICE FOR COLLECTING SOLAR ENERGY**

(57)     The invention relates to a device (1) for collecting solar energy adapted to contain at least one suspension of solid particles (20) fluidized by a gas of fluidization (40), comprising at least one tube (100), the tube being essentially horizontal, and comprising at least one part of its surface (100a) capable of absorbing solar radiation beams (30), and to irradiate and heat said solid particles (20) once contained in said tube; a particle discharge (130) connected to one end of the tube (100) ; means of distribution (140) adapted to distribute the gas of fluidization (40) inside the tube (100) in a transverse direction to the longitudinal direction of the tube.

The invention relates also to a method comprising the steps of feeding solid particles (20) in a tube (100), said tube being essentially horizontal ; feeding a gas of fluidization (40) in said tube and distribute said gas of fluidization in a transverse direction to the longitudinal direction of said tube (100) in order to produce a bed of fluidized solid particles (20) ; heating said tube (100) with solar energy beams (30) so that the heat is transmitted to said solid particles (20); discharging said solid particles (20) in a particle discharge (130) connected to the one end of said tube (100).

FIG.1

**Description**

TECHNICAL FIELD OF THE INVENTION

The present invention relates to a device for collecting solar energy. Specifically, it relates to a device comprising at least one dense suspension (or bed) of particles fluidized by a gas and being heated directly or indirectly using a solar absorbing wall.

The particles are either reactive and/or non reactive particles.

The invention may have applications in :

- solar thermal power plants, the heat transfer fluid using heated fluidized particles ;
- solar thermal power plants, the thermal energy storage using heated fluidized particles ;
- highly overall endothermic reactions, involving single or multiple reactants, especially related to thermochemistry.

The main application of the present invention is a gas-solid endothermic reaction process using concentrated solar energy, such as thermal decomposition reactions, for instance: calcination, reduction, pyrolysis, gasification ...

BACKGROUND OF THE INVENTION

The principle of the invention is to form a dense suspension (or bed) of fluidized particles, those particles being contained in a solar collector.

Several designs of solar collectors have been proposed in the state of the art. The particles collectors are generally combined with power solar towers (for instance with a tower surrounded by a heliostat field).

The particles may be heated either directly by solar energy or indirectly using a solar opaque wall.

The patent application WO03049853 discloses a process using concentrated solar radiation to heat absorbing particles, so as to carry out highly endothermic gas phase chemical reactions ultimately resulting in the production of hydrogen. The solar radiation absorbing particles are non reactive particles, and they are typically carbon black (as shown in all the examples). They are especially sub-micron size range particles and non-agglomerated, thus providing the highest surface area possible for solar radiation absorption. The particles are contained in a reaction tube.

The heat radiation absorbing particles are flowing in a gas stream comprising at least one reactant gas selected from $CH_4$, $H_2S$, $CO_2$, and $H_2O$.

The particles may be produced by the chemical reaction that takes place in the reaction tube.

The carbon black particles are removed from the gas stream after the gas exits the reaction tube, by a suitable method known in the art, such as by filtration, cyclonic separation, or a combination thereof.

The patent application discloses that the reaction tube may be oriented horizontally or vertically or in other spatial orientations, but the examples, modes and figures describe only a vertically oriented tube. Furthermore it is disclosed that the reaction tube is adapted in such a way that the particles and the reactant gas flow in a co-current flow configuration.

The reaction tube may also be composed of two concentric tubes, meaning that there is an outer transparent tube surrounding an inner refractory tube.

The reaction tube is preferably transparent or semi-transparent to the concentrated sunlight, so that the particles are directly heated. Alternatively, the tube can be made of any high temperature refractory material, such as graphite that subsequently heats the absorbing particles flowing inside.

The particles are dispersed in the reactant gas stream by a fluidization gas and by means such as a feed injection tube and a high velocity fluidization gas exiting the feed injection tube. It is disclosed that both fluidization gas and solid particles are flowing in the vertical direction, either and preferably in a co-current flow configuration, or in a counter-current flow configuration. It is also disclosed that the typical velocity of the fluidization gas is at least 10 m/s, and may reach extremely high velocities exceeding 60 m/s.

One of the drawbacks of device disclosed in this patent application is that the configuration requires a high fluidization gas velocity, so the particles are diluted in the gas flow, inducing poor heat transfer conditions, or inducing the need of sub-micron size range particles thus providing the highest surface area possible for solar radiation absorption.

Another drawback is that the residence time of the reactant product (the reactant gas in this case) is short and non controllable. Then it is adapted to a very fast chemical reaction, proceeding at extremely short residence time. Anyway, the said patent application relates to a rapid-heating, short residence-time solar thermal process (and in the examples, it is stated that the residence time is less than one second).

Furthermore, this patent application refers small (sub-micron size range) particles, known to be very cohesive and sticky. That means that it's quite difficult to remove them from the reaction tube, especially in retention areas such as corners. And that requires the use of other devices such as by filtration, cyclonic separation.

A drawback of the use of a tube that is transparent or semi-transparent to the concentrated solar energy is that the component is usually fragile, and is very sensitive to particles erosion and to dust deposition, especially with sub-micron range particles. Furthermore, these tubes are limited in size and not adapted to large scale processes.

The patent application WO2012052661 relates to a device for collecting solar energy. In particular it relates to a device comprising at least one dense suspension of solid particles fluidized by a fluidization gas. It is disclosed and specified that the dense suspensions of particles are flowing vertically upwardly or downwardly in the solar collector, for example in vertical tubes that form elements of the solar collector, and that both fluidization gas and solid particles are flowing in the vertical direction, either in a co-current flow configuration, or in a counter-current flow configuration.

It is stated that the average size of the particles of the suspension is between 20 and 150 $\mu$m and that particles of the group A of the Geldart classification may be used.

The most important drawback of the device in this patent application is that it imposes to use a given average particle size. The size must be sufficiently large to prevent the formation of aggregates, and sufficiently small to prevent a heterogeneous fluidization, and to prevent using a high fluidization gas velocity (of about several m/s). Indeed, a high fluidization gas velocity is incompatible with a dense suspension of solid particles. And when the particles are diluted in the gas flow, heat transfer conditions are poorest. A poor heat transfer coefficient is about 200 W/m$^2$.K and less.

Furthermore, when the solid particles are reactant, it is unlikely that the size of the particles can be chosen.

Another drawback is that the residence time of the particles in the solar collector is short and hardly controllable. So it is not adapted to a long time chemical reactions, for instance reactions that need residence time varying between ten seconds to several hours.

So there is a problem to be solved that is having a device for collecting solar energy comprising at least one dense suspension of solid fluidized particles with good heat transfer condition and using particles size varying in a wide range.

The problem is even more significant when the solar collector that contains the particles has a small diameter, for instance when solar collectors are made of small diameters tubes, adapted to heat more efficiently and in a homogeneous way the particles that flow inside.

The present invention aims to overcome these drawbacks.

In particular, it is an objective of the invention to provide a device for collecting solar energy comprising at least one suspension of solid fluidized particles, using particles size varying in a wide range, while preserving a high heat transfer coefficient and allowing a high residence time of the solid particles and the control of it.

A high heat transfer coefficient is for instance more than 500 W/m$^2$.K.

A wide range of particles size is for example between 5 $\mu$m and 1 mm.

A high residence time is for example more than seconds and may reach several hours.

It is another objective of the invention to allow dense suspensions of solid fluidized particles. In other words, it is also an objective to use a low fluidization gas velocity, characteristically less that 2 m/s.

Another objective is to easily design large scale processes.

EXPOSURE OF THE INVENTION

One subject of the invention is therefore a device for collecting solar energy comprising

- at least one tube adapted to contain a suspension of solid particles fluidized by a gas of fluidization, the tube being essentially horizontal, and comprising at least one part of its surface capable of absorbing solar radiation beams in order to heat solid particles in the tube ;
- means of distribution adapted to distribute a gas of fluidization inside the tube in a transverse direction to the longitudinal direction of the tube ;
- a particle discharge connected to one end of the tube.

In other words, one part of the surface - that may be also named "the wall" - of the tube is adapted to absorb solar radiation beams, which are transferred to solid particles once contained in the tube, in order to heat said solid particles.

The means of distribution of gas of fluidization in the tube enables the formation of a suspension of solid particles once contained in said tube.

According to the invention, the terms "suspension" may also be called "suspended bed" or "bed".

The device may be adapted so that the solid particles are distributed longitudinally and regularly in said tube.

The device may comprise a particle feeder connected to another end of the tube.

The device may be adapted so that the solid particles circulate according to a circulation direction in said tube between the particle feeder and the particle discharge. In this configuration, the means of distribution distribute the gas of fluidization inside the tube in a transverse direction to the solid particles circulation direction.

In the present specification, the device for collecting solar energy may also be named "solar collector".

In the present specification, the terms "essentially horizontal" must be understood as "having a maximum angle from the horizontal position of 1 degree".

The invention as claimed makes it possible to solve the stated problems, namely :

- The device allows the fluidization in the tubes of a large range of particles size with an easy and efficient control of their residence time in the device : for a given tube length, the residence time of the particles is controlled by the height of the particle discharge and is dependent on the design of the solar collector. Mean residence time are from seconds to hours. The residence time may also be controlled by the mass flow rate of the particle feeding.
- The fluidization of particles with very different diameters, from very fine and cohesive (5 $\mu$m) to large (1 mm).
- The device according to the invention doesn't require a high fluidization gas velocity, characteristically less that 2 m/s : it is possible thank to a small pressure loss associated with the fluidization because the fluidized bed depths are limited. For instance, the fluidization velocity is about 2 to 8 times the minimum fluidization velocity ($V_{mf}$) of the related particles, with optimum ranges about 2 to 5 times $V_{mf}$. As some examples : for 100 micron particles, a fluidization velocity from 0.02 to 0.1 m/s should be applied, whereas for 500 micron particles a fluidization velocity from 0.25 to 1.25 m/s should be applied.
- Easy scaling up solutions : connections between tubes are possible : parallel, series and mixed and several possible configurations are possible. The device according to the invention is basically modular.

Another advantage of the device is the easy separation of the gas of fluidization and the particles : due to the low fluidization gas velocities, particle entrainment is very limited and expected negligible, implying that the separation of particles from the gas exhausted from the solar collector is facilitated and probably not required.

It is also possible to optimize the shape of the tube section (progressive sections of different widths, angles, heights or lengths) to better accommodate the absorbing surface of the tube to the incoming concentrated solar radiation angular distribution and the effect of the gaseous/vapor reaction products on the fluidization hydrodynamics.

These problems are solved maintaining high values of wall-to-bed heat transfer coefficient enabling to consume high values of concentrated solar flux on the walls of the tubes.

Moreover, due to the very low flow rates of the fluidization air, dust emissions are reduced to a minimum, and a high temperature filtration by sintered metal fiber filters, or ceramic filters is possible, with the advantage of a possible recycle of the exhaust gas as fluidization gas.

The device according to the invention has the other advantage to allow processing in confined atmosphere, an inert distribution gas may be chosen.

The device may comprise means to adjust the height h of the particle discharge of the tube. It is an important way of controlling the residence time before or during the process takes place.

The means of distribution may also be adapted to distribute the fluidization gas regularly along the tube.

The means of distribution may comprise a distributor hose inserted in the tube.

The distributor hose may comprise holes drilled in said hose, so that the distribution gas passes through the holes.

The distributor hose may be a porous hose so that the distribution gas passes through the porosity of the hose.

A tube may be straight.

A tube may alternatively be curved, for example to form a cylinder.

A tube may comprise several compartments.

Each compartment in the tube may be dedicated to a specific step of a reaction.

The device may comprise several tubes arranged in a parallel configuration, most of the tubes being essentially horizontal.

The device may comprise in addition a particle discharge system connected to all the particle discharges of the tubes.

The device may comprise in addition a particle feeder system connected to all the particle feeders of the tubes.

The device may comprise several tubes arranged in series, most of the tubes being essentially horizontal, said tubes being connected to each other so that the particles circulate from the first tube to the last tube, preferentially to the particle discharge of the last tube.

The tubes may be arranged in cascade in the horizontal axis.

The tubes may be placed above on another.

The tubes may be arranged in a combined configuration.

The device may be configured in such a way that the solar radiation beams irradiate the part of the tube(s) being subjected to particle renewal by the fluidized particles. It is important to fit the solar irradiated part of the tube with the part filled by the solid fluidized bed in order to avoid hot spot on the absorber tube wall.

The device may comprise means to vibrate at least one tube.

The device may comprise means to pulse the fluidized solid particles.

A tube may comprise all or any part of its surface made of an opaque material, such as a metal or a ceramic material.

The solid particles may be selected from, but not limited to, the groups consisting of inert or reactive particles, including e.g. either sand, silicon carbide, olivine, alumina, metal particles, metal oxide, carbide or nitride particles, or reactive particles, respectively.

The solid particles may be reactive particles and the solar collector is, in this case, a thermo-chemical reactor in which is carried out a heat treatment of the solid or a solid/gas reaction, the reaction being like deshydration, decomposition, decarbonization, and reduction. In this case, the device may be named "solar reactor".

The solid particles may alternately be a mixture of chemically inert and reactive particles, and in this case, the solar collector may also be a solar reactor in which a reaction, for example, upgrading organic, products takes place.

The volumetric solids fraction of the fluidized bed is preferentially between 30% and 60%.

Another subject of the invention is a method for collecting solar energy.

The method according to the invention comprises the steps of :

- feeding solid particles in a tube, said tube being essentially horizontal ;
- feeding a gas of fluidization in said tube and distributing said gas of fluidization in a transverse direction to the longitudinal direction of said tube in order to produce a bed of fluidized solid particles ;
- heating said tube with solar energy beams so that the heat is transmitted to said solid particles ;
- discharging said solid particles in a particle discharge connected to the one end of said tube.

In a particular embodiment, the solid particles are fed in a particle feeder connected to another end of the tube.

In a particular embodiment, the solid particles circulate in a continuous way in the tube between the particle feeder and the particle discharge.

In another particular embodiment, the solid particles circulate in a semi-continuous way in the tube from inside the tube to the particle discharge of the tube.

In another particular embodiment, the solid particles circulate in a semi-continuous way in the tube between the particle feeder and the particle discharge of the tube.

In another particular embodiment, the solid particles circulate in several tubes arranged in series, arranged in parallel or arranged in a combined mode.

The method may comprise a step of regulation of the velocity of the gas of fluidization so as to generate a low height $h_{fl}$ of the fluidized solid particles bed in relation to the length L of the tube. The ratio of $L/h_{fl}$ may be at least more than 10.

The velocity of the gas of fluidization may be less than 2 m/s.

The method may comprise a step of regulation of the residence time of the solid particles in the tube.

The step of regulation may comprise a step of the determination of the height h of the particle discharge.

The method may comprise a step of pulsation of the fluidized solid particles.

The pressure of the fluidization may be preferentially chosen at atmospheric pressure (1 atm), and can be adapted and regulated according to the needs of the different applications.

The gas of fluidization may be a reactive or a non reactive gas.

Another subject of the invention is therefore a solar plant comprising a device for collecting solar energy as described above.

The solar plant according to the invention comprises a device for collecting solar energy as described above, means for routing the solid particles to said device and a solar concentrating system arranged to irradiate the tubes with at least a solar beam.

The solar plant according to the invention may comprise means for storing the cold particles and/or means for storing the hot particles.

The solar concentrating system may be arranged to irradiate some of the tubes with solar beams of different radiation energies.

The solar concentrating system may be arranged to irradiate the at least two compartments of one or more tubes with solar beams of different radiation energies.

DESCRIPTION OF THE FIGURES

Other features and advantages of the present invention will become more clearly apparent on reading the following description given by way of illustrative non limiting example, and with reference to the appended drawings in which :

- figure 1 illustrates a device according to the invention comprising one tube ;

- figure 2 illustrates one embodiment of the invention, the tubes being in a parallel configuration and being one above each other;
- figure 3 illustrates another embodiment of the invention, the tubes being configured in a series and in cascade configurations ;
- figure 4 illustrates another embodiment of the invention, the tubes being configured in a series configuration and being one above each other;
- figures 5a and 5b illustrate a special embodiment of the invention, the tube having compartments ;
- figure 6 illustrates a particular embodiment of the invention, the tube being straight;
- figure 7 illustrates another embodiment of the invention, the tube being curved ;
- figure 8 illustrates a layout of solar thermal plant comprising a device according to the invention.

DETAILED DESCRIPTION OF PARTICULAR EMBODIMENTS

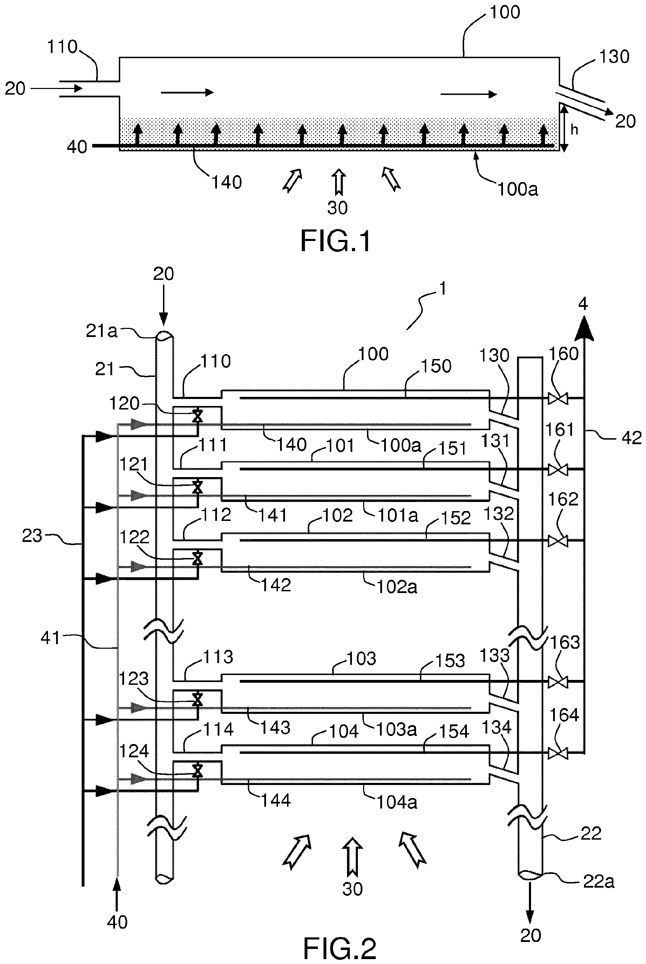

Figure 1 illustrates a tube 100 in which a flow of solid particles 20 circulates in a horizontal direction. The tube 100 is connected to a particle feeder 110 by which the particles 20 are conveyed and introduced into the tube 100, and to a particle discharge 130 by which the particles exit from the tube. At least one surface 100a of the tube 100 is capable of absorbing the solar radiation beams 30 that are directed to said surface 100a and to irradiate and heat the solid particles 20 circulating inside the tube. A gas of fluidization 40 is distributed by a feed hose 140 in such a way to distribute the fluidization gas 40 inside the tube 100 in a transverse direction to the solid particles circulation direction. The feed hose 140 is placed in the lower part of the tube 100. In this configuration, a suspension of solid particles is generated and is circulating from the particle feeder 110 to the particle discharge 130.

The residence time of the particles is to a large extent dependent on the particle flow rate and on the height h of the particle discharge 110. The gas fluidization velocity has a minor impact since the fluidization velocity selected is quite low in most of the cases.

The height of the fluidized particles bed is low related to the length of the tube 100.

Figure 1 illustrates a continuous device.

Alternatively, the device may be a semi-continuous device.

Alternatively, the tube 100 is not connected to a particle feeder, since the solid particles may already be in the tube. For instance, the particles may be produced in the tube 100 by a chemical reaction. In this case, the tube is still connected to a particle discharge 130. At least one surface 100a of the tube is capable of absorbing the solar radiation beams 30 that are directed to said surface 100a and to irradiate and heat the solid particles 20. A gas of fluidization 40 is distributed by a feed hose 140 in such a way to distribute the fluidization gas 40 inside the tube 100 in a transverse direction to the longitudinal direction of the tube. The feed hose 140 is placed in the lower part of the tube 100. In this configuration, a suspension of solid particles is generated along the tube. The particles 20 are routed to the particle discharge 130 so as to exit from the tube.

In this case, the residence time of the particles is to a large extent dependent on the height h of the particle discharge 110. The gas fluidization velocity has a minor impact since the fluidization velocity selected is very low.

Figure 2 illustrates a layout of a device 1 according to the invention, comprising at least five horizontal tubes 100, 101, 102, 103, 104. The solid particles 20 circulate in the tubes in a circulation direction, which is essentially horizontal. Thereafter, this configuration of the tubes is named "a parallel configuration". In this example, the tubes are configured one above the other.

Figure 2 illustrates a continuous device.

Alternatively, the device may be a semi-continuous device

The device also comprises a feeder particle system 21 connected to the particle feeders 110, 111, 112, 113, 114 of the tubes and comprising an inlet 21 a adapted to feed the device 1 with the solid particles 20 to be fluidized, and a discharge particle system 22 connected to the particle discharges 130, 131, 132, 133, 134 of the tubes and comprising an outlet 22a adapted to discharge the particles 20 from the device 1.

Alternatively, one or more of the tubes 100, 101, 102, 103, 104 are not necessary connected to a particle feeder. The solid particles may already be in one or more tubes. For instance the particles may be produced in a tube by a chemical reaction.

Particle valves 120, 121, 122, 123, 124 are preferentially added between the feeder particle system 21 and the particle feeders 110, 111, 112, 113, 114 to control the introduction of the particles 2 in the different tubes 100, 101, 102, 103, 104. The particle valves 120, 121, 122, 123, 124 are preferentially non-mechanical control valves : in this case, they may be controlled by a control system 23.

The size, and particularly the height h of each particle discharge 130, 131, 132, 133, 134 is controllable. One embodiment of controlled height of a particle discharge 130 is illustrated further.

The device 1 also comprises a gas feed array 41 that feeds the horizontal tubes 100, 101, 102, 103, 104 with the fluidization gas 40, and a gas exhaust array 42 that routes the fluidization gas 40 to exhaust and/or to filtration and/or to heat recovery system. In this example :

- the gas feed array 41 comprises a feed hose 140, 141, 142, 143, 144 per tube, each feed hose 140, 141, 142, 143, 144 being connected to the tube in such a way to distribute the fluidization gas 40 inside the tube in a transverse direction to the solid particles circulation direction ; each feed hose 140, 141, 142, 143, 144 is placed in the lower part of the tube 100, 101, 102, 103, 104 ;
- the gas exhaust array 42 comprises a exhaust hose 150, 151, 152, 153, 154 per tube, each exhaust hose being connected to a tube in such a way to extract the fluidization gas 40 from the tube; each exhaust hose 150, 151, 152, 153, 154 is placed in the upper part of the tube;
- the gas exhaust array 42 also comprises gas valves 160, 161, 162, 163, 164 to control the evacuation of the fluidization gas 40 from the different tubes.

The concentrate solar beams 30 irradiate the tube from below. The solar beams 30 may come from a heliostat field, as illustrated in more details further.

In each tube 100, 101, 102, 103, 104 the particles 20 are fluidized by a gas 40 and are heated by the heat of a wall 100a, 101 a, 102a, 103a, 104a of the tube 100 submitted to the concentrated solar radiation 30.

The tube array of the horizontal tubes 100, 101, 102, 103, 104 is assembled in such a way that the solar beam 30 irradiates only the wall 100a of the tubes in contact facing the fluidized particles 20.

For a given tube length L, the residence time of the particles is controlled by the mass flow rate of the particle feeding and by the height h of the discharge slot to a major extent, and by the fluidization gas velocity to a minor extent.

So the particles 20 may circulate in several tubes in a parallel configuration as shown in figure 2.

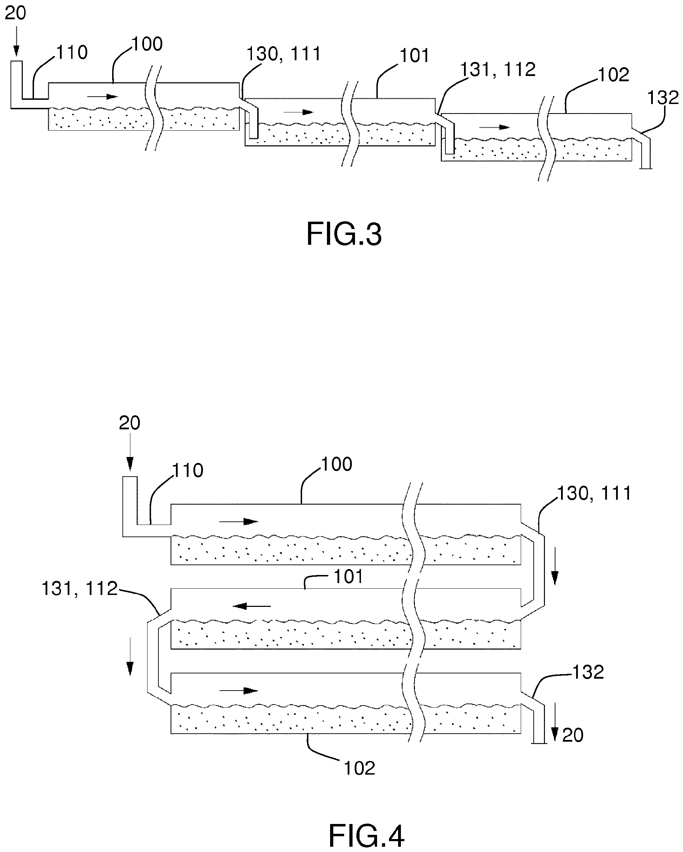

Alternatively, and depending on the targeted residence time and the particle flow rate, the particles may circulate in several tubes in series as shown in figures 3 and 4. Thereafter, this configuration of the tubes is named "a series configuration".

The tubes may be arranged either in one or the other configuration, or in a mixed configuration.

The tubes may also be designed differently, with different sections and/or different materials. The tubes may also be heated differently for instance on different parts of the wall with different solar radiation beams that come from different concentrators.

In figure 3, the solid particles 20 circulate in the tubes in series, and the tubes are disposed in line. By "in line" it is to be understood that the tubes are arranged next to each other and slightly offset in height so that the upstream tube is slightly higher than the downstream tube and that the particles 20 can naturally flow from the particle feeder 110 of a first tube 100 to the particle discharge 132 of a last tube 102. But the particles flow in an essentially horizontal direction in each tube. It may be also named a "cascade configuration".

In this example, there are three tubes, the particle discharge 130 of the first tube 100 being also (or being connected to) the particle feeder 111 of the second tube 101 and the particle discharge 131 of the second tube 101 being also (or being connected to) the particle feeder 112 of the third tube 102.

It is necessary to understand that the terms "upstream" and "downstream" refer to the flow of the particles.

In figure 4, the solid particles 20 circulate in the tubes in series, and the tubes are disposed one above the other. It may be also name a "zigzag configuration".

In this example, there are three tubes, the particle discharge 130 of the first tube 100 being also the particle feeder 111 of the second tube 101 and the particle discharge 131 of the second tube 101 being also the particle feeder 112 of the third tube 102.

Figures 3 and 4 illustrate a continuous device.

Alternatively, the device may be a semi-continuous device.

Alternatively, in one or the other of these two configurations, the first tube 100 is not necessary connected to a particle feeder 110. The solid particles may already be in said first tube. For instance the particles may be produced in said tube by a chemical reaction.

One or the other of the two configurations of the figures 3 and 4 may be used, depending on the space available in length or in height. The two configurations may also be combined. And it also may be combined with a configuration in parallel as described in relation with figure 2.

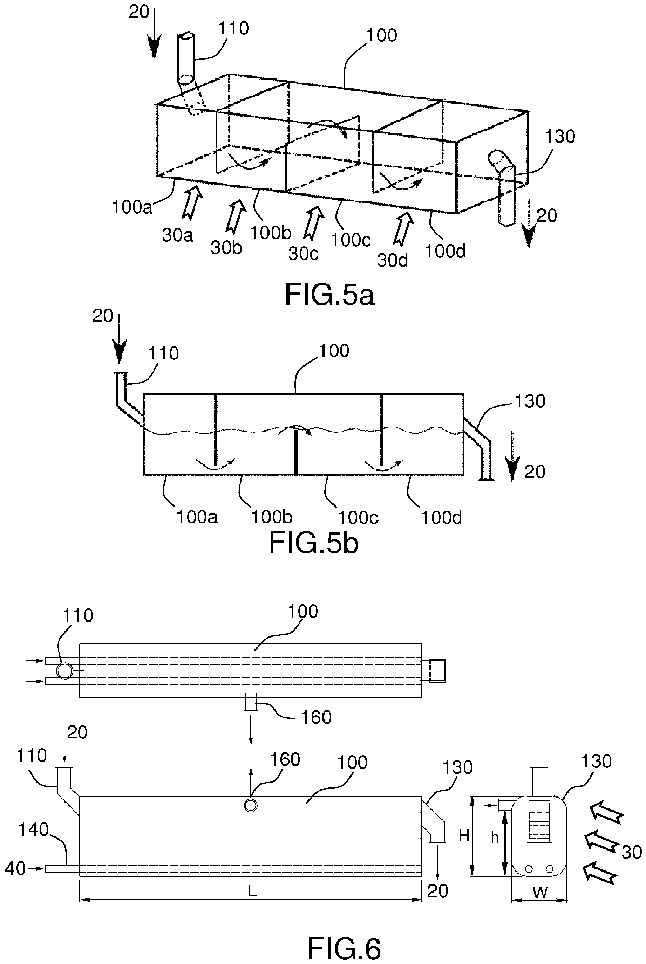

Figures 5a and 5b illustrate a special embodiment of the invention, a tube 100 having several compartments or baffles, for instance four compartments 100a, 100b, 100c, 100d in the illustrated example. The compartments may be designed differently, with different sections and/or different materials.

The compartments may also be heated differently, for instance with different solar radiation beams 30a, 30b, 30c, 30d that come from different concentrators.

Each compartment may be dedicated to a specific reaction. For instance, a first compartment may be dedicated to pre-heating, a second compartment to dehydration, a third to the chemical reaction and a fourth to cooling and/or post-reaction treatment.

Alternatively, a same reaction may take place in two or more compartments, for instance for a slow reaction, like deshydration.

It is also possible to use the different compartments to have different conditions of temperatures for a same reaction, thanks to different solar radiation beams.

Other uses and combinations of these compartments may be envisaged.

As shown in figure 6, the fluidized particles bed is obtained by injecting a fluidization gas 40 through at least a feed hose 140 (two hoses in the example) of small diameter inserted in the tube 100. The feed hose 140 may also be called distributor hose thereafter. The gas is distributed either by holes drilled in the distributor hose 140 or using a porous distributor hose 140.

There is also a gas exhaust hose 150.

The height of the fluidized particles bed inside the tube is small with respect to the tube length L.

The particles 20 flow inside the tube 100 continuously thanks to a particle feeder 110 connected to one end of a tube and to a particle discharge 130 connected to the other end of the tube.

The height h of the discharge slot determines the fluidized bed depth. For a given tube length L, the particle residence time is controlled by the particle flow rate, by the height h of the particle discharge, and by the fluidization gas velocity in a minor extend.

The tubes 100 can be designed using straight tubes as schemed in figure 4, wherein the dimensions L, W, H of the tube may be comprised in the following ranges :

- L: 0.5 to 15 m
- W: 0.08 to 0.3 m
- H: 0.1 to 0.5 m.

Straight tubes are particularly well suitable for combination of several tubes and of several shapes of tube.

In figure 6, the height of the particle discharge is adaptable by means of a vertically sliding gate installed at the discharge opening, the vertically sliding gate being controlled or regulated to adjust the height at which the particles are discharged.

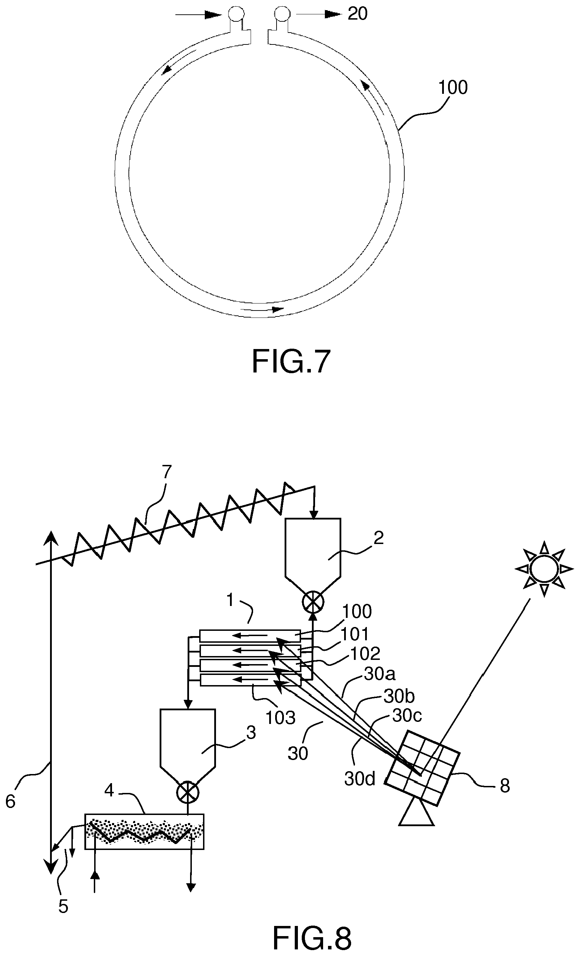

The tubes 100 may alternatively be designed using curved tubes, like cylindrical-shaped tubes, as schemed in figure 7. This design is particularly well suitable for a circular tower surrounded by a circular heliostat field.

Figure 8 illustrates a layout of a solar thermal plant comprising the device for collecting solar energy 1 according to the invention.

The solar thermal plant comprises a cold particle storage 2 that is connected to the device 1, so that the device 1 is supplied with the solid particles 20. In this example, the cold particle storage 2 has the shape of a hopper. It may be also named "cold storage hopper" thereafter.

In this example, there are four horizontal tubes 100, 101, 102, 103 arranged in a parallel configuration.

The device 1 is also connected to a hot particle storage 3 that may be a tank.

The hot particle storage 3 is connected to a particle heat exchanger or a heat recovery system 4. The particles 20 are either discharged by a product discharge 5 or recycled to the cold particle storage 2 thanks to a particle recycling 6 comprising an elevator (from ground level to solar tower top) and to a screw conveyor 7.

The concentrated solar beams 30 are obtained by a solar concentrating system 8.

The solar concentrating system 8 may be a solar tower, named also "central receiver concentrating system". It is composed of a heliostat field that reflects and concentrates solar energy atop a tower where is placed the device 1.

Two main operation modes may take place in this plant, depending on the applications, either solar power plant using inert particles or processing of reactive particles. A third case can be envisioned, the use of reactive particles for thermochemical energy storage. In this latter case, the operation mode is very similar to solar power plant operation mode.

Solar power plant operation mode.

Solar energy is concentrated to the device 1, and precisely to the horizontal tubes 100, 101, 102, 103 that are fed with solid particles 20 from the cold particle storage 2 (also named "cold storage hopper"). Particles heated inside the device 1 are stored in the hot particle storage 3. Hot particles are then introduced in the heat recovery system 4 (that may be a heat exchanger) that is used to heat the power block working fluid (either water/steam or pressurized gas). Cooled particles are finally recycled by the elevator 6 and the conveyor 7 and stored in the cold particle storage 2.

Preferentially, the cold storage hopper 2 is placed on top of the inlet of the device 1 to keep a steady feeding

Alternatively, a major cold storage hopper can be installed on the ground level, with another and smallest cold storage hopper acting as a small buffer and feeding hopper on top of the inlet of the device 1.

Reactive particle processing mode

In this case, the hot particle storage 3 is a buffer tank designed to feed with a controlled particle flow rate the heat recovery system 4. Then cooled particles are discharged with the product discharge 5. There is no necessarily recycling loop. The elevator 6 may be used only to transport the particles to be processed at the device 1 or at cold particle storage 2.

ILLUSTRATION OF THE POTENTIAL USE OF THE INVENTION

The device for collecting solar energy according to the invention can e.g. be used as a heater of particles for a subsequent storage of said heated particles and utilization of the captured heat, or as solar reactor.

Both applications offer a considerable industrial potential, as illustrated for the case of calcination of limestone. Other calcinations (e.g. cement raw meal, dolomite, gypsum, phosphate rock) are less demanding since the thermal treatment of these minerals occurs at a lower calcination temperature and the endothermic heat of these reactions is significantly lower than the required reaction heat of $CaCO_3$, therefore considered as a relevant test case.

The calcination of limestone, $CaCO_3$, proceeds according to the equilibrium reaction :

$$CaCO_3 \leftrightarrow CaO + CO_2$$

The reaction proceeds at temperatures in excess of about 810 °C, and is complete at 900°C (at atmospheric pressure). The reaction is endothermic, and requires the supply of heat both as sensible heat (to preheat the limestone from ambient temperature to the reaction temperature) and as reaction heat (1672 kJ/kg $CaCO_3$, at 95% conversion). The sensible heat is commonly supplied for > 60% by heat recovery on the kiln exhaust gas and/or CaO cooling, which guarantees a preheat temperature of the limestone to at least 600 °C.

In total, the reaction hence requires :

$$[1672 \text{ (kJ/kg)} + 1.05 \text{ (kJ/kgK)} \times (900-600)] = 1987 \text{ kJ/kg } CaCO_3.$$

For limestone particles of size below 300 $\mu$m, the reaction is very fast and below 1 minute.

Both the heat requirements and the conversion kinetics determine the layout and design of the solar reactor for calcination. The solar reactor is made of several horizontal tubes arranged in parallel according to one embodiment of the present invention.

The design approach can follow two alternatives, being :

(1) a design based upon a target production capacity; or
(2) a design based upon the available solar heat supply to the solar reactor.

The design based upon a target production capacity is illustrated hereafter, where two industrial cases are examined, i.e. (i) 60 tons/day of CaO (2500 kg/hr of CaO, requiring 4465 kg/hr of $CaCO_3$ feed) as currently produced in industrial vertical shaft or bubbling fluidized bed kilns, and (ii) 200 tons/day of CaO (14880 kg/hr of $CaCO_3$ feed) as commonly produced in rotary kilns.

(1) Production-based design

Since solar energy is only available for an average of 10 hrs/day, the capacities of the solar reactors need to treat 240% of the above mass flow rates of $CaCO_3$, i.e. 10710 kg/hr for the 60 tons/day kiln and 35712 kg/hr for the 200 tons/day objective.

The solar thermal input is hence determined for the required heat input (1987 kJ/kg $CaCO_3$) and equal to 5.9 MW (60 tons/day kiln) and 19.7 MW (200 tons/day kiln).

The heat transfer coefficient from the solar-heated wall of the solar reactor tubes to the bubbling particle suspension is very high, with values of 2.2 kW/m²K determined for small diameter particles.

If each tube has a length of 6 m, a width of 0.15 m and a bed height of 0.20 m, the exposed surface area is minimum 6 x (0.20 + 0.15), or 2.1 m². This is a very conservative estimate, because also the back side of the reactor will participate in the heat transfer, since heated by radiation in the refractory encapsulation of the reactor.

For an average temperature difference between the solar-heated wall of the tubes and the particle suspension of 100 K, the required exposed surface area of the reactors is:

60 tons/day case: 5900 / (2.2 x 100) = ~ 26.8 m$^2$, i.e. ~ 13 parallel tubes of 6 m length.
200 tons/day case: 19700 / (2.2 x 100) = ~ 89 m$^2$, i.e. ~ 43 parallel tubes of 6 m length.

The number of parallel tubes can be decreased if their length, height and or width are increased.
The required heat supply and transfer can hence certainly be achieved in a reactor set-up of acceptable dimensions.
Finally, the conversion kinetics needs to be accounted for.
The volume of particles in each tube is about 6 x 0.2 x 0.15 = 0.18 m$^3$. At a bulk density of CaO (~1000 kg/m$^3$), this corresponds to a content of 180 kg (M).
Since the feed rate to each of the parallel tubes is about 454 kg/hr (F), the average residence time (T) is given by T = M/F or 0.4 hr (24 minutes), 24 times exceeding the time needed for the conversion according to the reaction kinetics.
The required conversion (> 95%) can therefore certainly be achieved in the reactor set-up as described above.

(2) Solar heat-based design

This is examined for the case of a 10 MW solar input from the heliostat field.
At 80% efficiency of the solar reactor, 8 MW will be available at the reactor level.
In accordance with the basic reaction data as given before, this solar thermal input to the reactor will enable the treatment of :

8 MW (= 8000 kJ/s), this power enables to react the following calcite mass flow rate: 8000 (kJ/s) / 1987 (kJ/kg CaCO$_3$) = 4.03 kg/s of CaCO$_3$, i.e. 14494 kg/hr or 145 tons/day during a solar input period of 10 hr/day. Since CaO represents 56 wt% of CaCO$_3$, the effective CaO production will be 81 tons/day. Since the above production of 60 tons/day required a solar thermal input of 5.9 MW, the layout of the solar reactor will be 8 / 5.9 = 1.35 times the above example, leading to ~18 parallel tubes.

Considerations of both heat transfer and conversion remain identical, meaning that the reactor capacity can certainly be achieved in the reactor set-up as described.
These examples show that the device according to the invention can easily be designed for large scale processes.

**Claims**

1. A device (1) for collecting solar energy, comprising

   - at least one tube (100) adapted to contain at least one suspension of solid particles (20) fluidized by a gas of fluidization (40), the tube being essentially horizontal, and comprising at least one part of its surface (100a) capable of absorbing solar radiation beams (30) in order to heat solid particles in said tube ;
   - means of distribution (140) adapted to distribute a gas of fluidization (40) inside the tube (100) in a transversal direction to the longitudinal direction of the tube ;
   - a particle discharge (130) connected to one end of the tube (100).

2. A device (1) as claimed in claim 1 comprising a particle feeder (110) connected to another end of the tube (100).

3. The device as claimed in one of claims 1 or 2, comprising means to adjust the height (h) of the particle discharge (130) of the tube (100).

4. The device as claimed in one of claims 1 to 3, the means of distribution (140) comprising a distributor hose inserted in the tube (100), the distributor hose comprising holes drilled in said hose, or being a porous hose.

5. The device as claimed in one of claims 1 to 4, the tube (100) being straight.

6. The device as claimed in one of claims 1 to 4, the tube (100) being curved, for example to form a cylinder.

7. The device as claimed in one of claims 1 to 6, the tube (100) comprising at least two compartments (100a, 100b, 100c, 100d), that may be used for specific reactions or specific steps of a reaction.

8. The device as claimed in one of claims 1 to 7, comprising several tubes (100, 101, 102, 103, 104) arranged in a parallel configuration, most of the tubes being essentially horizontal.

9. The device as claimed in claim 8, comprising in addition a discharge particle system (22) connected to all the particle discharge (130, 131, 132, 133, 134) of the tubes (100, 101, 102, 103, 104).

10. The device as claimed in one of claims 8 or 9 , comprising in addition a feeder particle system (21) connected to all the particle feeders (110, 111, 112, 113, 114) of the tubes (100, 101, 102, 103, 104).

11. The device as claimed in one of claims 1 to 10, comprising several tubes (100, 101, 102) arranged in series, most of the tubes being essentially horizontal, said tubes being connected to each other so that the particles (20) circulate from the first tube (100) to the last tube (102), preferably to the particle discharge (132) of the last tube (102).

12. The device as claimed in one of claims 1 to 11, the tubes (100, 101, 102) being arranged in cascade in the horizontal axis.

13. The device as claimed in one of claims 1 to 12, the tubes (100, 101, 102) being placed above on another.

14. A method for collecting solar energy, said method comprising the steps of

- feeding solid particles in a tube (100), said tube being essentially horizontal ;
- feeding a gas of fluidization (40) in said tube and distributing said gas of fluidization in a transverse direction to the longitudinal direction of said tube (100) in order to produce a bed of fluidized solid particles (20) ;
- heating said tube (100) with solar energy beams (30) so that the heat is transmitted to said solid particles (20);
- discharging said solid particles (20) in a particle discharge (130) connected to the one end of said tube (100).

15. A method as claimed in claims 14, the solid particles being fed in a particle feeder (110) connected to another end of a tube (100) and circulating in a continuous mode in the tube (100) between a particle feeder (110) and the particle discharge (130).

16. A method as claimed in one of claims 14 or 15, the solid particles circulating in a semi-continuous mode in the tube (100) from inside the tube (100) to the particle discharge (130).

17. A method as claimed in one of claims 14 to 16, comprising a step of regulation of the velocity of the gas of fluidization (40) of less than 2 m/s.

18. A solar plant comprising a device (1) as claimed in one of claims 1 to 13, means (6, 7) for routing the solid particles (20) to the device (1), a solar concentrating system (8) arranged to irradiate the tubes (100, 101, 102, 103, 104) with at least a solar beam (30), means (2) for storing the cold particles and/or means (3) for storing the hot solid particles

19. A solar plant as claimed in claims 18, the solar concentrating system (8) being arranged to irradiate some of the tubes (100, 101, 102, 103, 104) with solar beams (30, 30a, 30b, 30c, 30d) of different radiation energies.

20. A solar plant as claimed to one of claims 18 or 19, comprising a device (1) as claimed in claim 7, the solar concentrating system (8) being arranged to irradiate the at least two compartments (100a, 100b, 100c, 100d) of a tube (100) with solar beams (30a, 30b, 30c, 30d) different radiation energies.

FIG.1

FIG.2

FIG.3

FIG.4

FIG.5a

FIG.5b

FIG.6

FIG.7

FIG.8

Europäisches
Patentamt

European
Patent Office

Office européen
des brevets

# EUROPEAN SEARCH REPORT

Application Number

EP 17 30 6005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2012/052661 A2 (CENTRE NAT RECH SCIENT [FR]; TOULOUSE INST NAT POLYTECH [FR]; FLAMANT) 26 April 2012 (2012-04-26) * the whole document * | 1-16 | INV. B01J8/18 B01J8/42 |
| X,D | WO 03/049853 A1 (MIDWEST RESEARCH INST [US]; WEIMER ALAN A [US]; DAHL JAIMEE K [US]; LE) 19 June 2003 (2003-06-19) * the whole document * | 1-16 | |
| X | US 2014/311479 A1 (MARYAMCHIK MIKHAIL [US] ET AL) 23 October 2014 (2014-10-23) * the whole document * | 1-16 | |

TECHNICAL FIELDS
SEARCHED (IPC)

B01J

The present search report has been drawn up for all claims

| Place of search | Date of completion of the search | Examiner |
|---|---|---|
| Munich | 29 January 2018 | Cagnoli, Michele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 17 30 6005

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2018

| Patent document cited in search report | | | Publication date | Patent family member(s) | | | Publication date |
|---|---|---|---|---|---|---|---|
| WO 2012052661 | A2 | | 26-04-2012 | AU | 2011317414 | A1 | 30-05-2013 |
| | | | | CN | 103270144 | A | 28-08-2013 |
| | | | | EP | 2630219 | A2 | 28-08-2013 |
| | | | | FR | 2966567 | A1 | 27-04-2012 |
| | | | | MA | 34664 | B1 | 02-11-2013 |
| | | | | US | 2013284163 | A1 | 31-10-2013 |
| | | | | WO | 2012052661 | A2 | 26-04-2012 |
| | | | | ZA | 201302874 | B | 29-10-2014 |
| WO 03049853 | A1 | | 19-06-2003 | AU | 6304001 | A | 23-06-2003 |
| | | | | EP | 1341604 | A1 | 10-09-2003 |
| | | | | JP | 2005511467 | A | 28-04-2005 |
| | | | | MX | PA02011011 | A | 19-08-2004 |
| | | | | US | 2003208959 | A1 | 13-11-2003 |
| | | | | WO | 03049853 | A1 | 19-06-2003 |
| US 2014311479 | A1 | | 23-10-2014 | US | 2014311479 | A1 | 23-10-2014 |
| | | | | WO | 2014176098 | A1 | 30-10-2014 |

EPO FORM P0459

For more details about this annex : see Official Journal of the European Patent Office, No. 12/82

**REFERENCES CITED IN THE DESCRIPTION**

**Patent documents cited in the description**

- WO 03049853 A
- WO 2012052661 A